# EUROPÄISCHE PATENTSCHRIFT

(11) **EP 2 407 005 B1**
(45) Veröffentlichungstag und Bekanntmachung des Hinweises auf die Patenterteilung: **13.03.2013**
(21) Anmeldenummer: 11710509.8
(22) Anmeldetag: 29.03.2011
(51) Int. Cl.: H05B 3/06, H05B 3/50

(54) **ELEKTRISCHE HEIZUNG INSBESONDERE FÜR EIN HYBRID- ODER ELEKTROFAHRZEUG**
ELECTRIC HEATING SYSTEM, IN PARTICULAR FOR A HYBRID VEHICLE OR ELECTRIC VEHICLE
CHAUFFAGE ÉLECTRIQUE, EN PARTICULIER POUR UN VÉHICULE HYBRIDE OU ÉLECTRIQUE

(30) Priorität: 30.03.2010 DE 102010013372
(43) Veröffentlichungstag der Anmeldung: 18.01.2012
(73) Patentinhaber: Behr-Hella Thermocontrol GmbH, 70469 Stuttgart (DE)
(72) Erfinder: TRAPP, Ralph, 33102 Paderborn (DE); RÖHLING, Hans-Dieter, 59558 Lippstadt (DE)
(74) Vertreter: von Kreisler Selting Werner
(86) Internationale Anmeldenummer: PCT/EP2011/054775
(87) Internationale Veröffentlichungsnummer: WO 2011/120946

(56) Entgegenhaltungen:
- EP-A1- 1 657 963
- EP-A2- 1 164 816
- FR-A1- 2 855 933
- US-A1- 2006 082 433

## Beschreibung

Die Erfindung betrifft eine elektrische Heizung, die sich insbesondere für den Einsatz in einem Hybrid- oder Elektrofahrzeug eignet.

Elektrische Heizungen mit PTC-Elementen sind bekannt. Auf Grund der bei herkömmlichen Kraftfahrzeugen üblichen 12 V-Bordnetze fließen durch die PTC-Elemente beträchtliche Ströme, die über Leistungstransistoren gesteuert werden. Diese Transistoren erzeugen relativ hohe Verlustleistungen, weshalb sie gekühlt werden müssen. Dies wiederum erhöht den konstruktiven Aufwand.

Aus FR-A-2 855 933 ist es bekannt, die Steuertransistoren einer elektrischen Kfz-Heizung in unmittelbarer Nähe eines Heizelements anzuordnen. In EP-A-1 657 963 ist beschrieben, die Steuertransistoren zusammen mit dem Heizelement einer elektrischen Kfz-Heizung auf einer gemeinsamen Leiterplatine zu positionieren.

Durch die jetzt anstehenden Fahrzeuggenerationen der Hybrid- und Elektrofahrzeuge und die damit verbundene Erhöhung der Bordspannung auf einige 100 V reduziert sich die Strombelastung für elektrische Heizungen und deren Heizelemente erheblich. Da es sich nunmehr bei den elektrischen Heizungen um Vollheizungen handelt, wird eine gegenüber den bisherigen PTC-Zusatzheizungen um mindestens dreifach erhöhte elektrische Wärmeleistung benötigt.

Durch den Einsatz von Hochvolt-Bordnetzen von ca. 400 V in Kraftfahrzeugen ist es also möglich, auch zur Erzielung von höheren Heizleistungen als bei elektrischen Heizern für Niedervolt-Bordnetze (z.B. 24 V) die Stromstärken herabzusetzen, womit auch der Querschnitt der Zuleitungen verringert werden kann. Allerdings werden für Hochvolt-Anwendungen hermetisch abgedichtet Heizelemente mit hoher elektrischer Durchschlagsfestigkeit benötigt, die darüber hinaus berührungssicher und feuchtigkeitsresistent sein sollten.

Aufgabe der Erfindung ist es, eine elektrische Heizung für insbesondere Hybrid- oder Elektrofahrzeuge zu schaffen, die den zuvor genannten Anforderungen genügen.

Zur Lösung dieser Aufgabe wird mit der Erfindung eine elektrische Heizung insbesondere für ein Hybrid- oder Elektrofahrzeug vorgeschlagen, die versehen ist mit den Merkmalen des Anspruchs 1. Die Unteransprüche betreffen einzelne Ausgestaltungen der Erfindung.

Durch die Reduzierung der maximalen Strombelastung infolge des Einsatzes von Hochvolt-Bordnetzen ist es erfindungsgemäß möglich, als Alternative zu den PTC-Heizelementen einen keramischen Flächenheizstreifen mit insbesondere aufgedrucktem Widerstandsheizleiter zu verwenden. Vorteilhaft ist hier die homogene flächige Wärmeerzeugung, wohingegen bei den bekannten PTC-Heizungen jeweils punktuelle Wärmeeinspeisungen (Hot Spot) erfolgen.

Erfindungsgemäß wird für die elektrische Heizung ein elektrisch isolierendes, wärmeleitendes Keramiksubstrat eingesetzt, das eine Heizzone und eine Ansteuerzone aufweist, die auf einer gemeinsamen Seite oder auf unterschiedlichen Seiten des Keramiksubstrats angeordnet sind sowie in Flächenerstreckung des Keramiksubstrats voneinander beabstandet sind. Innerhalb der Heizzone des Keramiksubstrats befindet sich ein Widerstandsheizelement, das als auf dem Keramiksubstrat aufgebrachter Widerstandsheizleiter insbesondere als Pastendruck ausgebildet ist. In der Ansteuerzone des Keramiksubstrats befindet sich ein Transistor zur Steuerung des Stroms durch den Widerstandsheizleiter, wobei neben dem Transistor optional auch noch andere elektrische Bauelemente sowie Leiterbahnen innerhalb der Ansteuerzone angeordnet sein können. Die Heizzone des Keramiksubstrats ist thermisch mit einem (ersten) Kühlkörper gekoppelt.

Gemäß dem erfindungsgemäßen Konzept ist das Keramiksubstrat Leiterplatte und Heizung in einem, wobei durch die Anordnung der Heizzone und der Ansteuerzone sowie durch den Kühlkörper eine Gesamtwärmeleitfähigkeit des Heizmoduls erreicht wird, die derart ist, dass der Transistor und gegebenenfalls die anderen optional vorhandenen elektrischen Bauelemente nicht überhitzen. Die Abführung der innerhalb der Heizzone erzeugten Hitze über den ersten Kühlkörper und von dort an die Umgebung ist also so dimensioniert, dass der Transistor und andere optional vorhandene Bauelemente in ihrer Funktion thermisch nicht beeinträchtigt sind.

Zweckmäßigerweise erstreckt sich der (erste) Kühlkörper über das gesamte Keramiksubstrat, an dessen einen Seite der (erste) Kühlkörper thermisch gekoppelt anliegt. Vorteilhafterweise befindet sich auf der gegenüberliegenden Seite des Keramiksubstrats das Widerstandsheizelement und die Ansteuerzone. Derjenige Teil der innerhalb der Heizzone erzeugten Wärmeleistung, der durch das Keramiksubstrat zur Ansteuerzone gelangt, wird also von dieser zum ersten Kühlkörper transportiert und von diesem an die Umgebung abgegeben.

In vorteilhafter Weiterbildung der Erfindung ist vorgesehen, dass der Widerstandsheizleiter durch ein sich über die Heizzone des Keramiksubstrats erstreckendes Keramikabdeckelement abgedeckt ist, das mit dem Keramiksubstrat zur Bildung eines Verbunds verbunden ist, und dass ein zweiter Kuhlkörper vorgesehen ist, der thermisch leitend an dem Keramikabdeckelement anliegt und sich über die Heizzone erstreckt, wobei sich der Verbund aus dem Keramiksubstrat und dem Keramikabdeckelement zwischen den beiden Kühlkörpern befindet. Bei dieser Weiterbildung der Erfindung ist der Widerstandsheizleiter und damit die Heizzone von einem Keramikabdeckelement abgedeckt, was es nunmehr möglich macht, an dem Keramikabdeckelement einen zweiten Kühlkörper anzuordnen, der thermisch gekoppelt mit dem Keramikabdeckelement ist. Das keramische Heizelement (Keramiksubstrat, Widerstandsheizleiter und Keramikabdeckelement) ist also beidseitig von Kühlkörpern eingeschlossen. Für die Betriebssicherheit ist es von Vorteil, wenn der Verbund aus dem Keramiksubstrat und dem Keramikabdeckelement zum Schutz vor dem Eindringen von Gasen und/oder Fluiden nach außen dicht abgeschlossen ist, was darüber hinaus eine hohe elektrische Durchschlagsfestigkeit mit sich bringt. Damit ist das Heizmodul berührungssicher und feuchtigkeitsresistent.

Insoweit von Vorteil ist es, wenn sich über der Heizzone des Keramiksubstrats eine den Widerstandsheizleiter überdeckende Passivierungsschicht befindet. Die Passivierungsschicht ist vorzugsweise als Glaspassivierungsschicht ausgeführt.

Infolge der beidseitigen Abdeckung des Widerstandsheizelements (Widerstandsheizleiter) durch Keramikelemente (Keramiksubstrat und Keramikabdeckelement) entsteht ein montagefreundliches und berührungssicheres Heizelement, das auch vor Beschädigungen geschützt ist. Infolge der beidseitigen Keramik-Außenschichten kann das Heizelement problemlos zwischen zwei Kühlkörpern angeordnet werden, wobei die Keramikelemente den elektrischen Widerstandsheizleiter vor Beschädigungen schützt.

Zweckmäßigerweise wird der Widerstandsheizleiter als Widerstandspastendruck ausgeführt. Dieses Verfahren ermöglicht eine einfache Herstellung des Widerstandsheizleiters.

Die Verbindung des Keramikabdeckelements mit der (Glas-)Passivierungsschicht erfolgt in vorteilhafter Weiterbildung der Erfindung durch eine Glaslotschicht, über die das Keramikabdeckelement mit der Passivierungsschicht "verschmolzen" ist.

Zweckmäßigerweise weist die erfindungsgemäße elektrische Heizung einen Temperaturfühler auf, der innerhalb der Ansteuerzone angeordnet ist und dessen Ausgangssignal einer Auswerte- und Ansteuereinheit zur Durchführung einer Temperaturüberwachung zwecks Überhitzungsschutz zuführbar ist. Die Temperatur auf dem Keramiksubstrat wird damit kontinuierlich erfasst und begrenzt. Zur Temperaturüberwachung und der daraus resultierenden Temperaturbegrenzung kann darüber hinaus kontinuierlich der Stromverlauf des Widerstandsheizleiters gemessen werden. Durch ein fest definiertes Temperatur-Widerstandsverhältnis kann somit uber die Stromkennlinie auf die jeweilige Temperatur des Heizelements geschlossen werden. Die Ermittlung der Temperatur durch einen Temperaturfühler dient in diesem Ausführungsbeispiel in erster Linie der Redundanz und Betriebssicherheit der elektrischen Heizung.

Mit dem erfindungsgemäßen Konzept der Verwendung eines Heizelements als Keramikheizstreifen (Al₂O₃) ist die Möglichkeit des Leiterbahnen-Layouts zur Bestückung einer Treiberendstufe in der Ansteuerzone auf der Heizkeramik gegeben. Durch die räumliche Anordnung der Bestuckungszone (Ansteuerzone) im Abstand zur Heizzone sowie durch den Wärmeleitfaktor des verwendeten keramischen Materials ist der Wärmeeintrag von der Heizzone in die Ansteuerzone definiert, wobei dieser Wärmeeintrag darüber hinaus durch die Wärmeabführung an den ersten bzw. zweiten Kühlkörper definiert ist. Durch eine Leistungsregelung sowie eine Temperaturbegrenzung ist eine im festen thermischen Verbund stehende Treiberendstufe ohne Zusatzaufwand vor Überhitzung geschützt.

In vorteilhafter Weiterbildung der Erfindung ist ferner vorgesehen, mehrere Heizmodule mit jeweils zwei Kühlkörpern, die zu gegenüberliegenden Seiten des Heizmoduls abstehende Kühlfahnen aufweisen, in einem Halterahmen anzuordnen, in dem sie nebeneinander liegen, wobei die Kühlfahnen der einander zugewandt angeordneten Kühlkörper zweier benachbarter Heizmodule ineinandergreifen. Zur Vergleichmäßigung des Strömungswiderstandsgradienten über den Querschnitt der elektrischen Heizung ist es zweckmäßig, wenn der Halterahmen an seinen entlang der Kühlfahnen der außenliegenden Kühlkörper verlaufenden Ränder Abdeckabschnitte aufweist, die über die Kühlfahnen ragen und diese abdecken, so dass der Strömungswiderstand dieser Kühlkörper, zwischen dessen Kühlfahnen keine Kühlfahnen benachbarter Kühlkörper greifen, an den Strömungswiderstand im Bereich ineinandergreifender Kühlfahnen angepasst werden kann.

Die Erfindung wird nachfolgend anhand eines Ausführungsbeispiels und unter Bezugnahme auf die Zeichnungen näher erläutert. Im Einzelnen zeigen dabei:
- Fig. 1: eine perspektivische Ansicht eines Heizmoduls,
- Fig. 2: das Heizelement gemäß Fig. 1 in Explosionsansicht und
- Fig. 3: eine Ansicht auf eine elektrische Heizung mit mehreren Heizmodulen gemäß den Fign. 1 und 2.

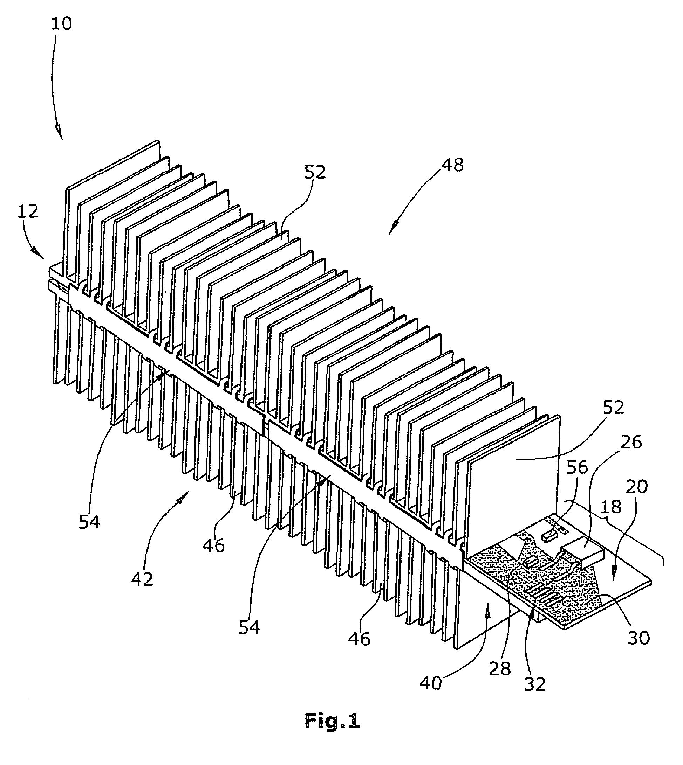

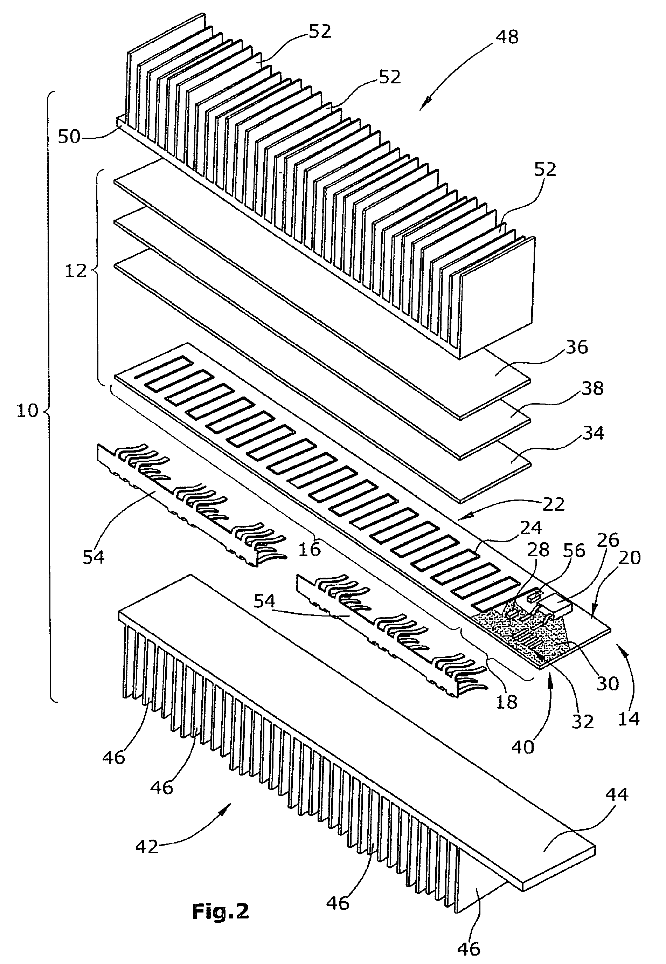

Fig. 1 zeigt perspektivisch ein Heizmodul 10, dessen Aufbau perspektivisch und in Explosionsdarstellung in Fig. 2 gezeigt ist. Das Heizmodul 10 ist für den Einsatz in Hochvolt-Bordnetzen von bis zu 400 V in Fahrzeugen, insbesondere Hybrid- oder Elektrofahrzeugen ausgelegt. Das Heizmodul 10 weist ein zentrales elektrisches Heizelement 12 auf, das mit einem Schichtenaufbau gemäß nachfolgender Beschreibung versehen ist. Das Heizelement 12 umfasst ein Keramiksubstrat 14, das in eine Heizzone 16 und eine Ansteuerzone 18 unterteilt ist. Beide Zonen 16,18 befinden sich auf der gemäß Fig. 2 oberen Seite 20 des Keramiksubstrats 14. Innerhalb der Heizzone 16 ist auf dem Keramiksubstrat 14 insbesondere im Pastendruckverfahren ein Widerstandsheizelement 22 in Form eines Widerstandsheizleiters 24 angeordnet, dessen Strom von einem Transistor 26 gesteuert ist. Der Transistor 26 sowie weitere elektronische Bauteile 28 befindet sich innerhalb der Ansteuerzone 18, die darüber hinaus ein Leiterbahn-Layout 30 mit Kontaktbereichen 32 aufweist.

Die Heizzone 16 ist von einer Glaspassivierungsschicht 34 überdeckt. Oberhalb der Glaspassivierungsschicht 34 befindet sich ein Keramikabdeckelement 36, das über eine Glaslotschicht 38 mit der Glaspassivierungsschicht 34 verbunden ist. Das Keramikabdeckelement 36 endet im Bereich des Übergangs zwischen der Heizzone 16 und der Ansteuerzone 18, so dass die Bauelemente innerhalb der Ansteuerzone 18 freiliegen. Der gesamte Verbund aus Keramiksubstrat 14, Glaspassivierungsschicht 34, Glaslotschicht 38 und Keramikabdeckelement 36 ist hermetisch dicht und elektrisch hoch durchschlagsfest und damit berührungssicher und feuchtigkeitsresistent.

Von der bezogen auf Fig. 2 Unterseite 40 des Keramiksubstrats 14 liegt an diesem ein erster Kühlkörper 42 an, der über die gesamte Erstreckung von Heizzone 16 und Ansteuerzone 18 verläuft. Der erste Kühlkörper 42 besteht aus wärmeleitendem metallischen Material wie beispielsweise einer Aluminiumlegierung und umfasst eine Basisplatte 44, von der einzelne Kühlfahnen 46 abstehen. Auf dem Keramikabdeckelement 36 liegt ein zweiter Kühlkörper 48 auf, der, wie der erste Kühlkörper 42 mit dem Keramiksubstrat 14, seinerseits mit dem Keramikabdeckelement 36 thermisch gekoppelt ist. Der zweite Kühlkörper 48 weist einen ähnlichen Aufbau wie der erste Kühlkörper 42 auf und umfasst eine Basisplatte 50 mit von dieser abstehenden Kühlfahnen 52. Beide Kühlkörper 42,48 sind mit Klammerelementen 54 zusammengehalten und damit beidseitig gegen das Heizelement gespannt gehalten.

Durch die beiden Kühlkörper 42,48 wird die innerhalb der Heizzone 16 erzeugte Wärme an die Umgebung abgeführt, wobei das gesamte Heizmodul 10 derart ausgelegt ist, dass die Ansteuerzone 18, obwohl sie unmittelbar neben der Heizzone 16 angeordnet ist, auf einer Temperatur gehalten werden kann, bei der die Funktion der elektrischen Bauteile nicht beeinträchtigt ist. Durch einen Temperaturfühler 56 kann die Temperatur der Ansteuerzone 18 erfasst werden, womit eine Temperaturüberwachung möglich ist. Eine derartige Temperaturüberwachung ist darüber hinaus realisierbar, indem anhand der Stromkennlinie des Widerstandsheizleiters auf die Temperatur des Heizelements 12 geschlossen werden kann. Vorzugsweise erfolgt fortlaufend eine Temperaturüberwachung des Keramiksubstrats. Mit Hilfe dieser Temperaturüberwachung ist eine elektronische Temperatur- und damit Leistungsbegrenzung des Heizelements 12 möglich. Ferner wird der Transistor 26 vor einer Überhitzung geschützt.

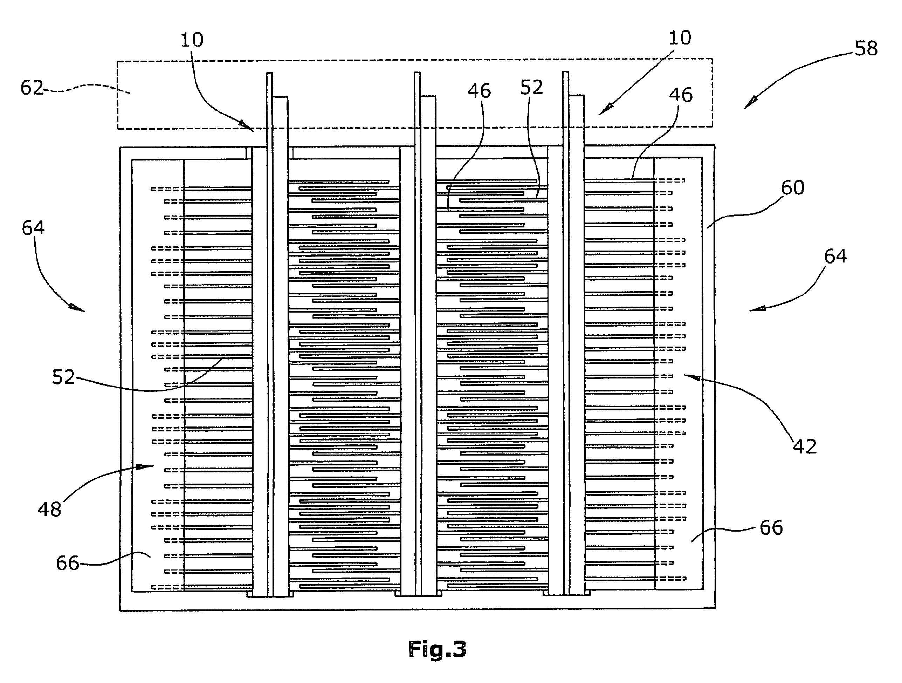

Mehrere Heizmodule 10 gemäß den Fign. 1 und 2 können nun zu einer elektrischen Heizung 58 gemäß Fig. 3 verbaut werden. Gemäß Fig. 3 weist die elektrische Heizung 58 einen Rahmen 60 auf, in dem in diesem Ausführungsbeispiel drei nebeneinanderliegende Heizmodule 10 angeordnet sind. Dabei greifen die Kühlfahnen 46 und 52 der einander benachbart angeordneten Kühlkörper 42 und 48 nebeneinander angeordneter Heizelemente 12 ineinander. Die Kontaktbereiche 32 der Ansteuerzonen 18 der Heizmodule 10 sind mit einer Ansteuer- und Auswerteeinheit 62 elektrisch verbunden. Durch die ineinandergreifenden Kuhlfahnen 46,52 weist die elektrische Heizung 58 über ihren Strömungsquerschnitt betrachtet zwischen den benachbarten Heizmodulen 10 einen größeren Strömungswiderstand auf als im Bereich der beiden bezogen auf die elektrische Heizung 58 außenliegenden Kühlkörper 42,48. Um auch in diesen Bereichen einen an den Strömungswiderstand zwischen den Heizmodulen 10 angepassten Strömungswiderstand zu erzielen, weisen die bezogen auf Fig. 3 beidseitig verlaufenden Rahmenabschnitte 64 Abdeckungen 66 auf, die zum Teil die Kühlfahnen 46,52 überdecken.

### BEZUGSZEICHENLISTE

- 10: Heizmodul
- 12: Heizelement
- 14: Keramiksubstrat
- 6: Heizzone
- 18: Ansteuerzone
- 20: obere Seite
- 22: Widerstandsheizelement
- 24: Widerstandsheizleiter
- 26: Transistor
- 28: Bauelemente
- 30: Leiterbahn-Layout
- 32: Kontaktbereiche
- 34: Glaspassivierungsschicht
- 36: Keramikabdeckelement
- 38: Glaslotschicht
- 40: Unterseite
- 42: erster Kühlkörper
- 44: Basisplatte
- 46: Kühlfahnen
- 48: zweiter Kühlkörper
- 50: Basisplatte
- 52: Kühlfahnen
- 54: Klammerelemente
- 56: Temperaturfuhler
- 58: Heizung
- 60: Halterahmen
- 62: Auswerte- und, Ansteuereinheit
- 64: Rahmenabschnitte
- 66: Abdeckabschnitte des Rahmens

## Patentansprüche

1. Elektrische Heizung insbesondere fur ein Hybrid- oder Elektrofahrzeug, mit
- einem Heizmodul (10), das versehen ist mit
- einem elektrisch isolierenden, wärmeleitenden Keramiksubstrat (14), das eine Heizzone (16) und eine Ansteuerzone (18) aufweist, die voneinander beabstandet sind,
- einem auf dem Keramiksubstrat (14) in dessen Heizzone (16) angeordneten elektrischen Widerstandsheizelement (22), das als auf dem Keramiksubstrat (14) aufgebrachter Widerstandsheizleiter (24) ausgebildet ist,
- einem Transistor (26) zur Steuerung des Stroms durch den Widerstandsheizleiter (24), wobei der Transistor (26) und andere optional vorhandene elektrische Bauelemente (28) sowie Leiterbahnen (30) auf dem Keramiksubstrat (14) in der Ansteuerzone (18) angeordnet sind, und
- einem ersten Kühlkörper (42), der mit der Heizzone (16) des Keramiksubstrats (14) thermisch gekoppelt ist.

2. Elektrische Heizung nach Anspruch 1, **dadurch gekennzeichnet, dass** die Heizzone (16) und die Ansteuerzone (18) auf einer gemeinsamen Seite (20) des Keramiksubstrats (14) oder auf unterschiedlichen Seiten (20,40) des Keramiksubstrats (14) angeordnet sind.

3. Elektrische Heizung nach Anspruch 1, **dadurch gekennzeichnet, dass** die Heizzone (16) und die Ansteuerzone (18) auf einer gemeinsamen ersten Seite (20) des Keramiksubstrats (14) ausgebildet sind und dass der erste Kühlkörper (42) thermisch leitend an der der ersten Seite (20) des Keramiksubstrats (14) gegenüberliegenden zweiten Seite (40) des Keramiksubstrats (14) anliegt und sich über den gesamten den Heiz- und Ansteuerzonen (16,18) gegenüberliegenden Bereich der zweiten Seite (40) des Keramiksubstrats (14) erstreckt.

4. Elektrische Heizung nach einem der Ansprüche 1 bis 3, **dadurch gekennzeichnet, dass** der Widerstandsheizleiter (24) durch ein sich uber die Heizzone (16) des Keramiksubstrats (14) erstreckendes Keramikabdeckelement (36) abgedeckt ist, das mit dem Keramiksubstrat (14) zur Bildung eines Verbunds verbunden ist, und dass ein zweiter Kühlkörper (48) vorgesehen ist, der thermisch leitend an dem Keramikabdeckelement (36) anliegt und sich über die Heizzone (16) erstreckt, wobei sich der Verbund aus dem Keramiksubstrat (14) und dem Keramikabdeckelement (36) zwischen den beiden Kühlkörpern (42,48) befindet.

5. Elektrische Heizung nach Anspruch 4, **dadurch gekennzeichnet, dass** sich auf der Heizzone (16) des Keramiksubstrats (14) eine den Widerstandsheizleiter (24) überdeckende Passivierungsschicht (34) befindet.

6. Elektrische Heizung nach Anspruch 5, **dadurch gekennzeichnet, dass** zwischen der Passivierungsschicht (34) und dem Keramikabdeckelement (36) zur dichten Verbindung eine Glaslotschicht (38) angeordnet ist.

7. Elektrische Heizung nach einem der Ansprüche 1 bis 6, **gekennzeichnet durch** einen Temperaturfühler (56), der innerhalb der Ansteuerzone (18) angeordnet ist und dessen Ausgangssignal einer Auswerte- und Ansteuereinheit (62) zur Durchführung einer Temperaturüberwachung zwecks Überhitzungsschutzes zuführbar ist.

8. Elektrische Heizung nach einem der Ansprüche 1 bis 7, **gekennzeichnet durch** mehrere Heizmodule (10) mit jeweils zwei Kühlkörpern (42,48), die zu gegenüberliegenden Seiten eines Heizmoduls (10) abstehende Kühlfahnen (46,52) aufweisen, und einen Halterahmen (60), in dem die Heizmodule (10) nebeneinander angeordnet gehalten sind, wobei die Kühlfahnen (46,52) der einander zugewandt angeordneten Kühlkörper (42,48) zweier benachbarter Heizmodule (10) ineinander greifen.

9. Elektrische Heizung nach Anspruch 8, **dadurch gekennzeichnet, dass** die Kühlfahnen (46,52) der außenliegenden Kuhlkörper (42,48) der beiden am weitesten voneinander beabstandeten Heizmodule (10) durch Abdeckabschnitte (66) des Halterahmens (60) teilweise abgedeckt sind.

## Claims

1. An electric heating system, in particular for a hybrid vehicle or electric vehicle, comprising
- a heating module (10) which is provided with
- an electrically insulating, heat conducting ceramic substrate (14) which has a heating zone (16) and a control zone (18) which are spaced apart from one another,
- an electrical resistance heating element (22) which is arranged on the ceramic substrate (14) in the heating zone (16) thereof, and which is formed as a resistance heating conductor (24) mounted on the ceramic substrate (14),
- a transistor (26) for controlling the current through the resistance heating conductor (24), the transistor (26) and other optionally present electrical components (28) and conductor tracks (30) being arranged in the control zone (18) on the ceramic substrate (14), and
- a first cooling body (42) which is thermally coupled to the heating zone (16) of the ceramic substrate (14).

2. The electric heating system according to claim 1, **characterized in that** the heating zone (16) and the control zone (18) are arranged on a common side (20) of the ceramic substrate (14) or on different sides (20,40) of the ceramic substrate (14).

3. The electric heating system according to claim 1, **characterized in that** the heating zone (16) and the control zone (18) are provided on a common first side (20) of the ceramic substrate (14), and that the first cooling body (42) rests in a thermally conducting manner against the second side (40) of the ceramic substrate (14) opposite the first side (20) of the ceramic substrate (14) and extends across the full area of the second side (40) of the ceramic substrate (14) opposite the heating and control zones (16,18).

4. The electric heating system according to any one of claims 1 to 3, **characterized in that** the resistance heating conductor (24) is covered by a ceramic cover element (36) extending across the heating zone (16) of the ceramic substrate (14), said cover element (36) being connected with the ceramic substrate (14) to form a compound structure, and that a second cooling body (48) is provided which rests in a thermally conducting manner against the ceramic cover element (36) and extends across the heating zone (16), wherein the compound structure composed of the ceramic substrate (14) and the ceramic cover (36) is located between the two cooling bodies (42,48).

5. The electric heating system according to claim 4, **characterized in that** on the heating zone (16) of the ceramic substrate (14) a passivation layer (34) covering the resistance heating conductor (24) is provided.

6. The electric heating system according to claim 5, **characterized in that** between the passivation layer (34) and the ceramic cover element (36) a glass solder layer (38) is arranged for providing a tight connection.

7. The electric heating system according to any one of claims 1 to 6, **characterized by** a temperature sensor (56) which is arranged within the control zone (18) and whose output signal is adapted to be supplied to an evaluation and control unit (62) for monitoring the temperature for the purpose of protection against overheating.

8. The electric heating system according to any one of claims 1 to 7, **characterized by** a plurality of heating modules (10) each having two cooling bodies (42,48) with cooling fins (46,52) extending towards opposite sides of a heating module (10), and a holding frame (60) in which the heating modules (10) are held in a side by side arrangement, said cooling fins (46,52) of the mutually facing cooling bodies (42,48) of two neighboring heating modules (10) being interleaved with each other.

9. The electric heating system according to claim 8, **characterized in that** the cooling fins (46,52) of the exterior cooling bodies (42,48) of the two heating modules (10) which are the farthest apart from each other are partly covered by cover sections (66) of the holding frame (60).

## Revendications

1. Chauffage électrique, en particulier pour un véhicule hybride ou électrique, comprenant
- un module de chauffe (10), comportant :
- un substrat en céramique (14) thermoconducteur, électriquement isolant, qui présente une zone de chauffe (16) et une zone de commande (18) à distance l'une de l'autre,
- un élément chauffant ohmique (22) électrique disposé sur le substrat en céramique (14) dans sa zone de chauffe (16), qui est réalisé sous forme de conducteur thermique ohmique (24) appliqué sur le substrat en céramique (14),
- un transistor (26) pour piloter le courant à travers le conducteur thermique ohmique (24), le transistor (26) et autres composants électriques (28) éventuellement présents ainsi que des pistes conductrices (30) étant disposés sur le substrat en céramique (14) dans la zone de commande (18), et
- un premier corps de refroidissement (42), thermiquement couplé à la zone de chauffe (16) du substrat en céramique (14).

2. Chauffage électrique selon la revendication 1, **caractérisé en ce que** la zone de chauffe (16) et la zone de commande (18) sont disposées sur une face commune (20) du substrat en céramique (14) ou sur des faces différentes (20, 40) du substrat en céramique (14).

3. Chauffage électrique selon la revendication 1, **caractérisé en ce que** la zone de chauffe (16) et la zone de commande (18) sont formées sur une première face (20) commune du substrat en céramique (14) et **en ce que** le premier corps de refroidissement (42) repose de façon thermoconductrice contre la deuxième face (40) du substrat en céramique (14) opposée à la première face (20) du substrat en céramique (14) et s'étend sur toute la région de la deuxième face (40) du substrat en céramique (14) opposée aux zones de chauffe et de commande (16, 18).

4. Chauffage électrique selon l'une des revendications 1 à 3, **caractérisé en ce que** le conducteur thermique ohmique (24) est recouvert d'un élément de recouvrement en céramique (36) s'étendant sur la zone de chauffe (16) du substrat en céramique (14), qui est relié au substrat en céramique (14) pour former un composite, et **en ce qu'**est prévu un deuxième corps de refroidissement (48) qui repose de façon thermoconductrice contre l'élément de recouvrement en céramique (36) et s'étend sur la zone de chauffe (16), le composite formé du substrat en céramique (14) et de l'élément de recouvrement en céramique (36) étant situé entre les deux corps de refroidissement (42, 48).

5. Chauffage électrique selon la revendication 4, **caractérisé en ce qu'**une couche de passivation (34) recouvrant le conducteur thermique ohmique (24) se trouve sur la zone de chauffe (16) du substrat en céramique (14).

6. Chauffage électrique selon la revendication 5, **caractérisé en ce qu'**est disposée une couche de brasure de verre (38) entre la couche de passivation (34) et l'élément de recouvrement en céramique (36) pour une liaison étanche.

7. Chauffage électrique selon l'une des revendications 1 à 6, **caractérisé par** un capteur de température (56) qui est disposé à l'intérieur de la zone de commande (18) et dont le signal de sortie peut être acheminé à une unité d'évaluation et de commande (62) pour effectuer un contrôle de température afin d'assurer une protection contre la surchauffe.

8. Chauffage électrique selon l'une des revendications 1 à 7, **caractérisé par** plusieurs modules de chauffe (10) dotés respectivement de deux corps de refroidissement (42, 48) qui présentent des ailettes de refroidissement (46, 52) faisant saillie sur des côtés opposés d'un module de chauffe (10), et par un châssis de maintien (60) dans lequel sont fixés côte à côte les modules de chauffe (10), les ailettes de refroidissement (46, 52) des corps de refroidissement (42, 48), disposés en regard l'un de l'autre, de deux modules de chauffe (10) adjacents venant en prise les unes dans les autres.

9. Chauffage électrique selon la revendication 8, **caractérisé en ce que** les ailettes de refroidissement (46, 52) des corps de refroidissement (42, 48) extérieurs des deux modules de chauffe (10) les plus éloignés l'un de l'autre sont partiellement recouvertes par des parties de recouvrement (66) du châssis de maintien (60).
